# EUROPÄISCHE PATENTANMELDUNG

(11) **EP 4 442 960 A1**
(43) Veröffentlichungstag der Anmeldung: **09.10.2024**
(21) Anmeldenummer: 24165394.8
(22) Anmeldetag: 22.03.2024
(51) Int. Cl.: F01D 5/14, F01D 9/06, F01D 17/16, F01D 25/02, B23P 15/04, F02C 7/047

(54) **VERFAHREN ZUR HERSTELLUNG EINER LEITSCHAUFEL UND LEITSCHAUFEL**

(30) Priorität: 04.04.2023 DE 102023108541
(71) Anmelder: MTU Aero Engines AG, 80995 München (DE)
(72) Erfinder: Freno, Dieter, 80995 München (DE); Maar, Karl, 80995 München (DE); Weber, Sebastian, 80995 München (DE); Glasenapp, Tobias, 80995 München (DE); Gast, Alexander, 80995 München (DE)

(57) **Zusammenfassung**

Die Erfindung betrifft ein Verfahren zur Herstellung einer Leitschaufel (1), insbesondere eines Vorleitrades einer Fluggasturbine, mit einem Hohlraum (2) zum Führen eines gasförmigen oder flüssigen Mediums zur Enteisung der Leitschaufel (1), sowie eine zugehörige Leitschaufel. Das Verfahren umfasst die Schritte: (a) Bereitstellen eines metallischen Werkstückes; (b) Schmieden des Werkstückes zu einem Rohling (4); (c) Abtragen von Material, sodass aus dem Rohling (4) ein Grundkörper (5) mit einer Vertiefung (6) in einer Unterseite (3) gebildet wird; (d) Einbringen zumindest eines Kanals (8, 10) in eine Stirnseite (9, 11) des Grundkörpers (5), sodass der Kanal (8, 10) mit der Vertiefung (6) fluidisch verbunden ist; (e) Herstellen der Leitschaufel (1) durch Fügen des Grundkörpers (5) mit einer Abdeckung (12), wobei die Vertiefung (6) unter Ausbildung des Hohlraumes (2) abgedeckt wird und das gasförmige oder flüssige Medium von dem ersten Kanal (8) über den Hohlraum (2) in den zweiten Kanal (10) führbar ist. Die Erfindung betrifft weiterhin eine Leitschaufel.

## Beschreibung

Die Erfindung betrifft ein Verfahren zur Herstellung einer Leitschaufel bzw. Verstellleitschaufel, insbesondere eines Vorleitrades einer Fluggasturbine, mit einem Hohlraum zum Führen eines gasförmigen oder flüssigen Mediums zur Enteisung (engl.: Deicing) der Leitschaufel bzw. dem Verhindern von Eisbildung (engl.: Antiicing) an der Leitschaufel. Des Weiteren betrifft die Erfindung eine zugehörige Leitschaufel.

Vor einer ersten Verdichterstufe einer Gasturbine kann ein Vorleitrad (engl.: Inlet Guide Vane, IGV) installiert sein, welches dazu vorgesehen ist, einen Drall einer anströmenden Luft vor einem Eintritt in die erste Verdichterstufe zu verändern. Dies kann vorteilhaft die Verdichterstufe entlasten, beziehungsweise eine Effizienz der Verdichterstufe erhöhen. Das Vorleitrad kann aus einer Vielzahl von Leitschaufeln bestehen, welche der angesaugten Strömungsluft der Gasturbine unmittelbar ausgesetzt sind. Daraus können je nach Einsatzgebiet besondere Anforderungen an die Leitschaufel erwachsen.

Beispielsweise kann es erforderlich sein, ein Enteisungssystem bzw. Antieissystem für die Leitschaufel bereitzustellen, um bereits gebildetes Eis wieder abzulösen bzw. eine Anhaftung von Eispartikeln und/oder Eisbildung an der Leitschaufel eines Vorleitrades in einem Eintrittsgehäuse einer Fluggasturbine zu verhindern. Bekannte Systeme sind elektrische Enteisungssysteme. Des Weiteren kann es erforderlich sein, dass Leitschaufeln in einem vorderen Teil des Axialverdichters einem Vogelschlag standhalten müssen.

Der Erfindung liegt die Aufgabe zugrunde, ein Verfahren zur Herstellung einer Leitschaufel, sowie eine Leitschaufel vorzuschlagen, welche einer erhöhten Belastung in einem vorderen Teil einer Gasturbine standhält.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch einen ersten Aspekt der Erfindung ist ein Verfahren zur Herstellung einer Leitschaufel mit einem Hohlraum zum Führen eines gasförmigen oder flüssigen Mediums zur Enteisung der Leitschaufel bereitgestellt. Insbesondere kann das gasförmige Medium aus Luft, insbesondere heißer Verdichterluft und/oder Verbrennungsgasen bestehen. Die Leitschaufel kann insbesondere für ein Vorleitrad insbesondere einer Fluggasturbine vorgesehen sein. Darüber hinaus kann die Leitschaufel für eine beliebige Verdichterstufe einer Gas- oder Dampfturbine vorgesehen sein.

Das Verfahren umfasst zumindest die folgenden Schritte:
a) Bereitstellen eines Werkstückes, bestehend aus einem Metall oder einer Metalllegierung;
b) Schmieden des Werkstückes zu einem Rohling, sodass der Rohling zumindest näherungsweise eine Kontur bzw. äußere Geometrie der herzustellenden Leitschaufel aufweist;
c) Abtragen von Material aus einer Unterseite des Rohlings, sodass aus dem Rohling ein Grundkörper mit einer Vertiefung in der Unterseite gebildet wird, wobei sich die Vertiefung entlang einer Haupterstreckungsrichtung senkrecht zu einem Profil des Grundkörpers erstreckt;
d) Einbringen eines ersten Kanals in eine erste Stirnseite des Grundkörpers und/oder Einbringen eines zweiten Kanals in eine zweite Stirnseite des Grundkörpers, sodass der erste Kanal und/oder der zweite Kanal mit der Vertiefung fluidisch verbunden ist;
e) Herstellen der Leitschaufel durch Fügen des Grundkörpers mit einer Abdeckung, wobei die Vertiefung unter Ausbildung des Hohlraumes durch die Abdeckung abgedeckt wird und das gasförmige oder flüssige Medium von dem ersten Kanal über den Hohlraum in den zweiten Kanal führbar ist.

Mit dem erfindungsgemäßen Verfahren kann vorteilhaft auf besonders einfache, reproduzierbare und effiziente Weise eine Leitschaufel hergestellt werden, die einer erhöhten Belastung in einem vorderen Teil einer Fluggasturbine standhalten kann. Eine Leitschaufel, welches aus einem geschmiedeten Rohling hergestellt wird, weist vorteilhafte Materialeigenschaften insbesondere gegenüber Leitschaufeln aus einem gegossenen Rohling auf. Insbesondere können strukturmechanische Eigenschaften einer geschmiedeten Leitschaufel verbessert sein. Insbesondere kann eine geschmiedete Leitschaufel eine höhere Zähigkeit, sowie eine höhere Festigkeit gegenüber einer gegossenen Leitschaufel aufweisen. Dies kann insbesondere im Einsatz in dem Vorleitrad der Fluggasturbine von großen Vorteil sein. Die geschmiedete Leitschaufel kann beispielsweise widerstandsfähiger gegen einen Vogelschlag oder anderer, einschlagender Fremdobjekte ausgebildet sein.

Ein weiterer Vorteil des Verfahrens ist es, dass eine Leitschaufel hergestellt werden kann, die widerstandsfähig gegen eine Anhaftung von Eispartikeln und Eisbildung auf einer Oberfläche der Leitschaufel ausgebildet ist. Insbesondere kann durch den Hohlraum der Leitschaufel Luft, insbesondere erwärmte Luft aus dem Axialverdichter, geführt werden, sodass die Leitschaufel von innen erzwungen konvektiv erwärmbar ist, und eine Außenwandtemperatur der Oberfläche der Leitschaufel oberhalb einem Gefrierpunkt von Wasser gebracht bzw. gehalten werden kann. Dadurch kann sich vorteilhaft kein Eis auf der Oberfläche ausbilden, sodass ein gewünschtes, aerodynamisches Verhalten der Leitschaufel gewahrt werden kann.

Bevorzugt kann es vorgesehen sein, dass das Werkstück aus Titan oder einer Titanlegierung besteht. Insbesondere kann die Titanlegierung für ein Schmieden geeignet sein. Mit anderen Worten kann das Werkstück aus einem Titan-Schmiedewerkstoff bestehen, welches nachfolgend geschmiedet wird. Titan oder Titanlegierungen zeichnen sich durch hervorragende Materialeigenschaften aus. Insbesondere ist ein solches Material vergleichsweise leicht, sodass ein Gewicht der Leitschaufel reduziert und eine Effektivität einer Fluggasturbine mit einer solchen Leitschaufel gesteigert werden kann.

Durch Schmieden des Werkstückes kann dieses zu dem Rohling geformt werden. Der Rohling kann bereits im Wesentlichen eine Kontur bzw. äußere Geometrie oder zumindest näherungsweise die Kontur bzw. äußere Geometrie der herzustellenden Leitschaufel aufweisen. Oberflächeneigenschaften des Rohlings, insbesondere eine Rauheit, Welligkeit oder dergleichen, können in Bezug auf die herzustellende Leitschaufel noch unberücksichtigt sein. Insbesondere kann der Rohling bereits zumindest näherungsweise das Profil der herzustellenden Leitschaufel aufweisen. Mit anderen Worten wird ein zur Leitschaufel konturnaher Rohling geschmiedet. Der Rohling kann im Schritt c) bereits auf eine Fertigkontur des Rohlings geschmiedet werden oder zumindest bereichsweise oder vollständig mit einem Aufmaß zur Fertigkontur des Rohlings geschmiedet sein.

Unter einem Schmieden kann insbesondere ein Druckumformen zwischen zwei Werkzeugen verstanden werden, und ist insbesondere zu unterscheiden von einem Gießen zu einem Rohling, bei welchem ein Rohling aus einer Schmelze gegossen wird.

Der Rohling weist insbesondere die Unterseite und gegenüberliegend zur Unterseite eine Oberseite auf. Unter der Unterseite kann diejenige Seite verstanden werden, welche sich im Wesentlichen entlang einer Profiltiefe des Profils erstreckt, also von einer Vorderkante (Profilnase) des Profils zu einer Hinterkante des Profils. Vorzugsweise kann die Unterseite auf einer Druckseite des Profils sein bzw. der Druckseite entsprechen.

In einem Schritt wird das Material, also Metall oder Metalllegierung des Rohlings, aus der Unterseite abgetragen. Insbesondere ändert sich dadurch eine Kontur der Unterseite. Durch das Abtragen wird die Vertiefung gebildet. Unter der Vertiefung kann insbesondere eine Einbuchtung, Aushöhlung oder Abtragung verstanden werden. Der Grundkörper entspricht im Wesentlichen dem Rohling, aus welchem das Material abgetragen ist. Die Unterseite des Rohlings entspricht also der Unterseite des Grundkörpers.

Die Vertiefung erstreckt sich im Wesentlichen entlang der (ersten) Haupterstreckungsrichtung, welche senkrecht zum Profil des Grundkörpers erstreckt, wobei das Profil des Grundkörpers im Wesentlichen dem Profil des Rohlings nach dem Abtragen des Materials entspricht. Das Profil weist insbesondere eine Profiltiefe und eine Profildicke auf, wobei die erste Haupterstreckungsrichtung der Vertiefung senkrecht zur Profiltiefe und zur Profildicke verläuft. Darüber hinaus erstreckt sich die Vertiefung auch in eine Richtung der Profildicke und in eine Richtung der Profiltiefe. Insbesondere weist die Vertiefung eine Tiefe in Richtung der Profildicke und eine Breite in Richtung der Profiltiefe auf.

Der Grundkörper bzw. die herzustellende Leitschaufel weist weiterhin die erste Stirnseite und, in der ersten Haupterstreckungsrichtung gegenüberliegend zu der ersten Stirnseite, die zweite Stirnseite auf. In einem montierten Zustand, insbesondere in dem Vorleitrad, können die Stirnseiten radial innen bzw. radial außen bezogen auf das Vorleitrad angeordnet sein.

Beispielsweise können der erste Kanal bzw. der zweite Kanal durch Bohren, Fräsen oder Erodieren in die jeweilige Stirnseite eingebracht werden. Der erste und/oder der zweite Kanal sind insbesondere entlang der Haupterstreckungsrichtung ausgebildet. Insbesondere können die Kanäle auch vor dem Einbringen der Vertiefung eingebracht sein. Beispielsweise kann diese Luft durch denselben Kanal oder durch weitere Öffnungen, insbesondere in einem Bereich einer Profilhinterkante der Leitschaufeln, wieder austreten.

Gemäß einer ersten Variante wird lediglich der erste Kanal oder der zweite Kanal eingebracht, sodass erwärmte Luft zumindest über die Vertiefung einströmen kann, wobei die erwärmte Luft Wärme an die herzustellende Leitschaufel abgeben kann.

Gemäß einer zweiten Variante werden sowohl der erste Kanal, als auch der zweite Kanal eingebracht. Der erste Kanal ist über die Vertiefung mit dem zweiten Kanal fluidisch verbunden, sodass erwärmte Luft von dem ersten Kanal in die Vertiefung einströmen und aus dem zweiten Kanal wieder aus der Vertiefung ausströmen kann, wobei die erwärmte Luft Wärme an die herzustellende Leitschaufel abgeben kann.

In einem weiteren Schritt wird der Grundkörper mit der Abdeckung gefügt, sodass die Leitschaufel im Wesentlichen hergestellt ist. Insbesondere können noch weitere Verfahrensschritte zur finalen Herstellung der Leitschaufel erfolgen. Beispielsweise kann eine Oberfläche der Leitschaufel nachbehandelt werden oder gegebenenfalls Anbauteile wie Lagerzapfen an die Leitschaufel, insbesondere an den Stirnseiten des Grundkörpers bzw. der Leitschaufel, angebracht werden.

Die Vertiefung kann insbesondere derart durch die Abdeckung abgedeckt werden, dass diese zur Unterseite der Leitschaufel bzw. des Grundkörpers fluidisch abgedichtet ist. Dadurch wird es ermöglicht, dass ein Luftmassenstrom von dem ersten Kanal über den Hohlraum in den zweiten Kanal verlustfrei führbar ist.

Der Hohlraum kann beispielsweise kanalförmig, beispielsweise geradlinig oder mäanderförmig, ausgebildet werden bzw. sein. Beispielsweise kann der Hohlraum aus mehreren, insbesondere parallelen Kanälen ausgebildet werden bzw. sein.

Die Abdeckung bzw. ein Rohling der Abdeckung kann vorzugsweise in einem zusätzlichen Verfahrensschritt aus einem weiteren Werkstück, insbesondere bestehend aus Titan oder einer Titanlegierung, geschmiedet werden. Andere Herstellungsschritte der Abdeckung sind ebenfalls denkbar.

In einem weiteren Verfahrensschritt kann es vorgesehen sein, dass die durch Fügen hergestellte Leitschaufel nachbearbeitet wird, insbesondere in einer Fügezone, beispielsweise durch ein zerspanendes Verfahren wie Fräsen, um eine glatte und stetige Oberfläche zu erhalten.

Durch das Verfahren kann somit eine hohle Leitschaufel aus einem geschmiedeten Rohling gefertigt werden, welche einer gegossenen Leitschaufel strukturmechanisch überlegen ist, und gleichzeitig mittels Luft erwärmt werden kann.

Eine Weiterbildung des Verfahrens sieht vor, dass der Rohling aus dem Werkstück geschmiedet wird, indem das Werkstück in zumindest eine Negativform gepresst wird. Insbesondre kann es vorgesehen sein, dass der Rohling mehrstufig aus dem Werkstück gepresst wird, wobei mehrere Negativformen verwendet werden. Dadurch kann das Werkstück stufenweise auf die Form des Rohlings gebracht werden. Das Pressen des Werkstückes hat gegenüber anderen druckumformenden Verfahren den Vorteil, dass dieser Schritt hoch reproduzierbar und automatisierbar ist, da insbesondere die zumindest eine Negativform für eine Serie von Rohlingen verwendet werden kann. Gerade bei einer hohen Stückzahl von Leitschaufeln in dem Vorleitrad bzw. einer hohen Stückzahl an Vorleiträdern kann dies besonders vorteilhaft sein. Des Weiteren können durch das Pressen besonders vorteilhafte, strukturmechanische Eigenschaften erzielt werden, insbesondere eine vergleichsweise hohe Zähigkeit und eine höhere Festigkeit, wohingegen ein gegossener Rohling vergleichsweise spröde und rissanfällig sein kann.

Eine Weiterbildung des Verfahrens sieht vor, dass das Werkstück unmittelbar vor dem Pressen auf eine Temperatur oberhalb einer Rekristallisationstemperatur des Metalls oder der Metalllegierung erhitzt wird. Das Material wird jedoch nicht geschmolzen bzw. nicht bis zu einer Schmelztemperatur erhitzt. Durch das Erhitzen kann ein Versagen des Werkstückes beim Pressen aufgrund der verbesserten Pressbarkeit oberhalb einer Rekristallisationstemperatur verhindert werden. Weiterhin können dadurch auch vorteilhaft die strukturmechanischen Eigenschaften weiter verbessert werden.

Eine Weiterbildung des Verfahrens sieht vor, dass das Material aus der Unterseite des Rohlings durch ein spanendes Fertigungsverfahren, insbesondere durch Fräsen, abgetragen wird. Vorteilhaft kann das Material somit automatisiert und damit reproduzierbar und hochpräzise abgetragen werden.

Eine Weiterbildung des Verfahrens sieht vor, dass der Grundkörper mit der Abdeckung durch Schweißen gefügt wird. Alternativ können der Grundkörper und die Abdeckung auch gelötet werden. Durch Schweißen kann die Abdeckung hochfest an den Grundkörper angebracht werden, sowie die Vertiefung zur Unterseite effektiv abgedichtet werden.

Eine Weiterbildung des Verfahrens sieht vor, dass das Material aus der Unterseite derart abgetragen wird, dass die Abdeckung nach außen, bezogen auf die äußere Geometrie der Leitschaufel, bündig abschließend in die Vertiefung einbringbar ist. Somit kann vorteilhaft eine ebene Unterseite der Leitschaufel gebildet werden, wobei die Abdeckung ein Teil der äußeren Geometrie an der Unterseite der Leitschaufel entsprechen kann. Insbesondere kann durch das Abtragen ein Randbereich der Vertiefung ausgebildet werden, welcher komplementär zu einem Rand der Abdeckung ausgebildet ist. Insbesondere kann der Randbereich eine Tiefe aufweisen, welcher zu einer Dicke am Rand der Abdeckung korrespondiert. Vorzugsweise liegt die Abdeckung am Randbereich innen auf, sodass die Abdeckung am Randbereich abgestützt ist.

Eine Weiterbildung des Verfahrens sieht vor, dass die Vertiefung derart abgetragen wird, dass die Vertiefung wannenförmig in der Unterseite gebildet wird, sodass die wannenförmige Vertiefung eine zweite Haupterstreckungsrichtung entlang einer Profiltiefe des Profils aufweist.

Eine Weiterbildung des Verfahrens sieht vor, dass das Material derart abgetragen wird, dass zumindest ein Steg bzw. eine Rippe zum Abstützen der Abdeckung im Wesentlichen mittig der Profiltiefe in der wannenförmigen Vertiefung ausgebildet wird oder zumindest zwei Stege bzw. zwei Rippen zum Abstützen der Abdeckung ausgebildet werden, welche entlang der Profiltiefe in der Vertiefung verteilt angeordnet werden.

Eine Weiterbildung des Verfahrens sieht vor, dass das Material derart abgetragen wird, dass ein oder mehrere Turbulatoren zum Erhöhen des Wärmeübergangs in Richtung der Profiltiefe in der wannenförmigen Vertiefung ausgebildet wird.

Durch einen weiteren Aspekt der Erfindung ist eine Leitschaufel, insbesondere eines Vorleitrades einer Fluggasturbine bereitgestellt. Die Leitschaufel ist zumindest aus einem geschmiedeten Grundkörper mit einer entlang einer Haupterstreckungsrichtung senkrecht zu einem Profil des Grundkörpers erstreckenden Vertiefung in einer Unterseite des Grundkörpers und einer Abdeckung gebildet. Die Abdeckung an der Unterseite ist derart angeordnet, dass die Vertiefung unter Ausbildung eines Hohlraumes zum Führen eines gasförmigen oder flüssigen Mediums zur Enteisung der Leitschaufel durch die Abdeckung abgedeckt ist. Insbesondere kann das gasförmige Medium aus Umgebungsluft und/oder Verbrennungsgasen bestehen. Ein erster Kanal in einer ersten Stirnseite des Grundkörpers und/oder ein zweiter Kanal in einer zweiten Stirnseite des Grundkörpers sind mit dem Hohlraum fluidisch verbunden. Insbesondere kann die Abdeckung ebenfalls geschmiedet sein.

Eine Leitschaufel, welches aus einem geschmiedeten Grundkörper besteht, weist vorteilhafte Materialeigenschaften insbesondere gegenüber Leitschaufeln aus einem gegossenen Rohling auf. Insbesondere können strukturmechanische Eigenschaften einer geschmiedeten Leitschaufel verbessert sein. Insbesondere kann eine geschmiedete Leitschaufel eine höhere Zähigkeit, sowie eine höhere Festigkeit bei Zug, Druck oder Ermüdung gegenüber einer gegossenen Leitschaufel aufweisen. Dies kann insbesondere im Einsatz in dem Vorleitrad der Fluggasturbine von großen Vorteil sein. Die geschmiedete Leitschaufel kann beispielsweise widerstandsfähiger gegen einen Vogelschlag oder anderer, einschlagender Fremdobjekte ausgebildet sein, da die geschmiedete Leitschaufel gegenüber der gegossenen Leitschaufel erst unter einer deutlichen höheren Belastung brechen kann.

Insbesondere kann eine Leitschaufel aus einem geschmiedeten Grundkörper eine höhere Zähigkeit, sowie eine höhere Festigkeit gegenüber einer gegossenen Leitschaufel aufweisen. Dies kann insbesondere im Einsatz in dem Vorleitrad der Fluggasturbine von großen Vorteil sein. Die geschmiedete Leitschaufel kann beispielsweise widerstandsfähiger gegen einen Vogelschlag oder anderer, einschlagender Fremdobjekte ausgebildet sein, da die geschmiedete Leitschaufel gegenüber der gegossenen Leitschaufel erst unter einer deutlichen höheren Belastung brechen kann.

Ein weiterer Vorteil der Leitschaufel ist, dass diese widerstandsfähig gegen eine Anhaftung von Eispartikeln und Eisbildung auf einer Oberfläche der Leitschaufel ausgebildet ist. Insbesondere kann durch den Hohlraum der Leitschaufel Luft, insbesondere erwärmte Luft aus dem Axialverdichter, geführt werden, sodass die Leitschaufel erzwungen konvektiv erwärmbar ist, sodass eine Außenwandtemperatur der Oberfläche der Leitschaufel oberhalb einem Gefrierpunkt von Wasser gebracht bzw. gehalten werden kann. Dadurch kann sich vorteilhaft kein Eis auf der Oberfläche ausbilden, sodass ein gewünschtes aerodynamisches und mechanisches Verhalten der Leitschaufel gehalten werden kann.

Eine Weiterbildung der Leitschaufel sieht vor, dass die Abdeckung an einer Druckseite der Leitschaufel angeordnet ist. Unter der Druckseite ist insbesondere diejenige Seite einer Leitschaufel zu verstehen, an welcher im Vergleich zu einer gegenüberliegenden Saugseite der Leitschaufel ein hoher Luftdruck herrscht, wenn die Leitschaufel einer angesaugten Luftströmung der Gasturbine ausgesetzt wird. Dadurch kann vorteilhaft gewährleistet werden, dass die Abdeckung an den Grundkörper durch die Luftströmung angepresst wird. Dies verleiht der Verbindung zwischen dem Grundkörper und der Abdeckung eine zusätzliche Stabilität. Darüber hinaus ist die Luftströmung auf der Druckseite stabiler gegenüber kleinen Störungen auf der Oberfläche durch Unebenheiten.

Eine Weiterbildung der Leitschaufel sieht vor, dass die Abdeckung nach außen bündig abschließend bezogen auf die äußere Geometrie der Leitschaufel in die Vertiefung eingebracht ist. Somit kann vorteilhaft eine ebene Unterseite der Leitschaufel gebildet werden, wobei die Abdeckung ein Teil der äußeren Geometrie an der Unterseite der Leitschaufel entsprechen kann. Insbesondere kann ein Randbereich der Vertiefung komplementär zu einem Rand der Abdeckung ausgebildet sein. Insbesondere kann der Randbereich eine Tiefe aufweisen, welcher zu einer Dicke am Rand der Abdeckung korrespondiert. Vorzugsweise liegt die Abdeckung am Randbereich innen auf, sodass die Abdeckung am Randbereich abgestützt ist.

Eine Weiterbildung der Leitschaufel sieht vor, dass die Vertiefung wannenförmig ausgebildet ist, wobei die wannenförmige Vertiefung eine zweite Haupterstreckungsrichtung entlang einer Profiltiefe des Profils aufweist. Insbesondere weist die wannenförmige Vertiefung eine Tiefe in Richtung einer Profildicke auf. Die wannenförmige Vertiefung kann derart groß ausgebildet sein, dass der Grundkörper als ein Hohlkörper und/oder im Verhältnis zu der Vertiefung dünnwandig ausgebildet ist. Die wannenförmige Vertiefung ist dahingehend vorteilhaft, dass ein ausreichend großer Luftmassenstrom zur Enteisung der Leitschaufel geführt werden kann. Weiterhin weist somit auch der Grundkörper weniger Material auf, welches durch den Luftmassenstrom erwärmt werden muss. Dadurch kann vorteilhaft der Luftmassenstrom reduziert werden. Ein weiterer Vorteil besteht darin, die Luft, die in dem Hohlraum geführt werden kann, großflächig die innere Oberfläche des Hohlraumes anströmen kann, sodass ein erhöhter Wärmeübergang stattfinden kann. Des Weiteren kann durch die dünnwandige Ausbildung des Grundkörpers vorteilhaft erreicht werden, dass sich dieser gegenüber einer dickwandigen Ausbildung schneller abkühlen lassen kann.

Vorzugsweise kann die Abdeckung plattenartig ausgebildet sein und die wannenförmige Vertiefung zur Ausbildung des Hohlraumes innerhalb der Leitschaufel ausbilden, wobei sich die plattenartige Abdeckung im Wesentlichen entlang der Haupterstreckungsrichtung senkrecht zum Profil und in Richtung der Profiltiefe erstreckt. Die innere Oberfläche des Hohlraumes kann insbesondere derart ausgebildet sein, dass eine turbulente Strömung begünstigt wird. Dadurch kann vorteilhaft der Wärmeübergang von der Heißluft auf die Leitschaufel gesteigert werden.

Eine Weiterbildung der Leitschaufel sieht vor, dass der Grundkörper einen Steg im Wesentlichen mittig der Profiltiefe in der Vertiefung zum Abstützen der Abdeckung in der wannenförmigen Vertiefung ausgebildet. Insbesondere kann der Steg im Wesentlichen in Richtung der Profildicke ausgebildet sein, wobei ein distales Ende des Steges dazu vorgesehen ist, die Innenseite der Abdeckung zu kontaktieren und diese dadurch mittig abzustützen. Dies hat den Vorteil, dass eine Stabilität der Leitschaufel erhöht wird. Vorzugsweise wird Grundkörper und die Abdeckung im Bereich des Steges durch Schweißen (Durchschweißen) oder Löten für eine höhere Stabilität und zur Verhinderung von Fretting gefügt.

Eine Weiterbildung der Leitschaufel sieht vor, dass der Grundkörper aus Titan oder einer Titanlegierung geschmiedet ist. Vorzugsweise kann die Abdeckung aus Titan oder einer Titanlegierung bestehen bzw. aus Titan oder einer Titanlegierung geschmiedet sein. Titan oder Titanlegierungen zeichnen sich durch hervorragende Materialeigenschaften aus. Insbesondere ist ein solches Material vergleichsweise leicht, sodass ein Gewicht der Leitschaufel reduziert und eine Effektivität einer Fluggasturbine mit einer solchen Leitschaufel gesteigert werden kann.

Eine Weiterbildung der Leitschaufel sieht vor, dass der Grundkörper zumindest zwei Stege (Rippen) zum Abstützen der Abdeckung ausbildet, welche entlang der Profiltiefe in der Vertiefung verteilt angeordnet sind. Dadurch kann die Stabilität vorteilhaft erhöht werden.

Eine Weiterbildung der Leitschaufel sieht vor, dass in einem Bereich einer Profilhinterkante Öffnungen ausgebildet sind, die mit dem Hohlraum fluidisch verbunden sind. Insbesondere kann dadurch die in den Hohlraum eingeströmte Heißluft zumindest teilweise, oder beispielsweise bei lediglich einem Kanal vollständig, durch die Öffnungen in die Umgebung entweichen. Insbesondere sind eine Vielzahl von Öffnungen, vorzugsweise mit einem Durchmesser in Millimeterbereich, entlang dem Bereich der Hinterkante verteilt. Die Öffnungen können insbesondere kleine Bohrlöcher sein, die den Hohlraum mit der Umgebung fludisch verbinden. Vorteilhaft kann somit die Profilhinterkante durch die strömende Heißluft erwärmt und damit enteist werden bzw. eisfrei gehalten werden.

Gemäß einer weiteren Ausführungsform können Turbulatoren, d.h. Strukturen zur Erhöhung des Wärmeübergangs, an der Innenfläche des Hohlraums und/oder der Abdeckung ausgebildet sein.

Eine Weiterbildung der Leitschaufel sieht vor, dass die Leitschaufel durch ein erfindungsgemä-ßes Verfahren hergestellt ist.

Weitere Ausführungsformen der erfindungsgemäßen Leitschaufel folgen unmittelbar aus den verschiedenen Ausgestaltungen des erfindungsgemäßen Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auf entsprechende Ausführungsformen der erfindungsgemäßen Leitschaufel übertragen.

Durch einen weiteren Aspekt ist eine Leitschaufel, insbesondere eines Vorleitrades einer Fluggasturbine, mit einem Hohlraum zum Führen eines gasförmigen oder flüssigen Mediums zur Enteisung der Leitschaufel, bereitgestellt, welche durch ein erfindungsgemäßes Verfahren hergestellt ist. Insbesondere handelt es sich hierbei um ein sogenanntes Product-by-Process.

Weitere Merkmale der Erfindung ergeben sich aus den Ansprüchen, den Figuren und der Figu-renbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen. Dabei zeigt:
- FIG. 1: ein Ablaufdiagramm eines Ausführungsbeispiels eines erfindungsgemäßen Verfahrens;
- FIG. 2: eine schematische Darstellung einer Seitenansicht eines Ausführungsbeispiels einer erfindungsgemäßen Leitschaufel;
- FIG. 3: eine schematische Schnittdarstellung eines Profils eines Ausführungsbeispiels einer erfindungsgemäßen Leitschaufel.

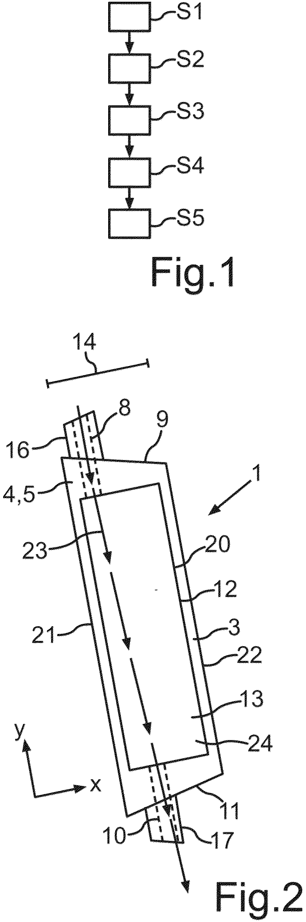

**FIG. 1** zeigt ein Ablaufdiagramm eines Ausführungsbeispiels eines erfindungsgemäßen Verfahrens zur Herstellung einer Leitschaufel 1, insbesondere eines Vorleitrades einer Fluggasturbine, mit einem Hohlraum 2 zum Führen eines gasförmigen Mediums (hier: Luft) zur Enteisung der Leitschaufel 1. In einem ersten Schritt S1 wird ein Werkstück bereitgestellt, bestehend aus einem Metall oder einer Metalllegierung. Vorzugsweise kann das Werkstück aus Titan oder einer Titanlegierung bestehen.

In einem zweiten Schritt S2 wird das Werkstück zu einem Rohling 4 geschmiedet, sodass der Rohling 4 zumindest näherungsweise eine äußere Geometrie bzw. Kontur der herzustellenden Leitschaufel 1 aufweist. Insbesondere wird der Rohling 4 aus dem Werkstück geschmiedet, indem das Werkstück in zumindest eine Negativform gepresst wird. Vorzugsweise kann das Werkstück unmittelbar vor dem Pressen auf eine Temperatur oberhalb einer Rekristallisationstemperatur des Metalls oder der Metalllegierung erhitzt werden.

In einem dritten Schritt S3 wird Material aus einer Unterseite 3 des Rohlings 4 abgetragen, sodass aus dem Rohling 4 ein Grundkörper 5 mit einer Vertiefung 6 in der Unterseite 3 gebildet wird, wobei sich die Vertiefung 6 entlang einer Haupterstreckungsrichtung Y senkrecht zu einem Profil 7 des Grundkörpers 5 erstreckt. Insbesondere kann das Material aus der Unterseite 3 des Rohlings 4 durch ein spanendes Fertigungsverfahren, insbesondere durch Fräsen, abgetragen werden.

In einem vierten Schritt S4 wird ein erster Kanal 8 in eine erste Stirnseite 9 des Grundkörpers 5 und ein zweiter Kanal 10 in eine zweite Stirnseite 11 des Grundkörpers 5 eingebracht, sodass der erste Kanal 8 über die Vertiefung 6 mit dem zweiten Kanal 10 fluidisch verbunden wird. Insbesondere können die Kanäle 8, 10 erodiert, gebohrt oder gefräst werden.

In einem fünften Schritt S5 wird die Leitschaufel 1 durch Fügen des Grundkörpers 5 mit einer Abdeckung 12 hergestellt, wobei die Vertiefung 6 unter Ausbildung des Hohlraumes 2 durch die Abdeckung 12 abgedeckt wird und Luft von dem ersten Kanal 8 über den Hohlraum 2 in den zweiten Kanal 10 führbar ist. Beispielsweise kann der Grundkörper 5 mit der Abdeckung 12 durch Schweißen oder Löten gefügt werden.

Die Abdeckung kann insbesondere in einem weiteren Verfahrensschritt aus einem Werkstück, bestehend aus Titan oder einer Titanlegierung, geschmiedet sein.

Durch das Verfahren wird somit eine geschmiedete Leitschaufel 1 bereitgestellt, welches den Hohlraum 2 im Inneren der Leitschaufel 1 ausbildet, durch welchen Luft zum Erwärmen der Leitschaufel geführt werden kann.

In **FIG. 2** ist eine schematische Darstellung einer Seitenansicht eines Ausführungsbeispiels einer erfindungsgemäßen Leitschaufel 1 gezeigt, welche beispielsweise in ein Vorleitrad einer Fluggasturbine integriert werden kann. Insbesondere kann hierbei eine Druckseite 13 der Leitschaufel 1 gezeigt sein. Die Leitschaufel 1 kann insbesondere aus dem geschmiedeten Grundkörper 5 gebildet sein. In Fig. 2 nicht gezeigt weist der Grundkörper 5 die Vertiefung 6 in dessen Unterseite 3 auf, wobei die Vertiefung 6 entlang der ersten Haupterstreckungsrichtung Y, welche sich im Wesentlichen senkrecht zu dem Profil 7 des Grundkörpers 5 erstreckt, ausbildet. Insbesondere kann die Vertiefung 6 beispielsweise in eine zweite Haupterstreckungsrichtung X erstrecken, welche der Richtung X der Profiltiefe 14 entsprechen kann.

Der Grundkörper 6 kann an der ersten Stirnseite 9 einen ersten Lagerzapfen 6 zum Lagern in einem Gehäuse der Fluggasturbine und an der zweiten Stirnseite einen zweiten Lagerzapfen 17 zum Lagern in dem Gehäuse der Fluggastturbine ausbilden oder mit diesen verbunden, beispielsweise verschweißt, sein.

Die Leitschaufel 1 kann insbesondere darüber hinaus aus der Abdeckung 12 gebildet sein, welche mit dem Grundkörper 5 verbunden, insbesondere verschweißt oder gelötet ist. Die Abdeckung 12 kann an der Unterseite 3 des Grundkörpers 5 bzw. der Leitschaufel 1 derart angeordnet sein, dass die Vertiefung 6 unter Ausbildung eines Hohlraumes 2 zum Führen eines gasförmigen Mediums (hier: Luft) zur Enteisung der Leitschaufel 1 durch die Abdeckung 12 abgedeckt und insbesondere abgedichtet ist. Insbesondere kann eine Außenseite 24 der Abdeckung 12 die Unterseite 3 bzw. die Saugseite 13 der Leitschaufel 1 zumindest teilweise ausbilden. Eine Innenseite 25 der Abdeckung 12 kann zusammen mit den Wänden der Vertiefung 6 den Hohlraum 2 umschließen.

Der erste Kanal 8 in der ersten Stirnseite 9 des Grundkörpers 5 und der zweite Kanal 10 in der zweiten Stirnseite 11 des Grundkörpers 5 sind insbesondere über die Vertiefung 6 miteinander fluidisch verbunden, sodass eine Luftströmung 23 einer erwärmbaren Luft durch bzw. in und aus den Hohlraum 2 strömen kann. Beispielsweise ist der erste bzw. zweite Kanal 8, 10 ebenso innerhalb der Lagerzapfen 16, 17 ausgebildet. Beispielsweise kann der erste Kanal 8 somit mit einer Warmluftquelle der Gasturbine und der zweite Kanal 10 mit einem Auslass oder einer Senke verbunden sein.

Die Leitschaufel 1 kann beispielsweise mit einer umgebenden Luftströmung umströmt werden, welche von einer Profilnase 21 über die Druckseite 13 bzw. einer gegenüberliegenden Saugseite 26 im Wesentlichen in Richtung einer Profiltiefe 14 zu einer Profilhinterkante 22 strömbar ist. Die Leitschaufel 1 kann insbesondere über die Lagerzapfen 16, 17 gelagert und gegebenenfalls drehverstellbar ausgebildet sein.

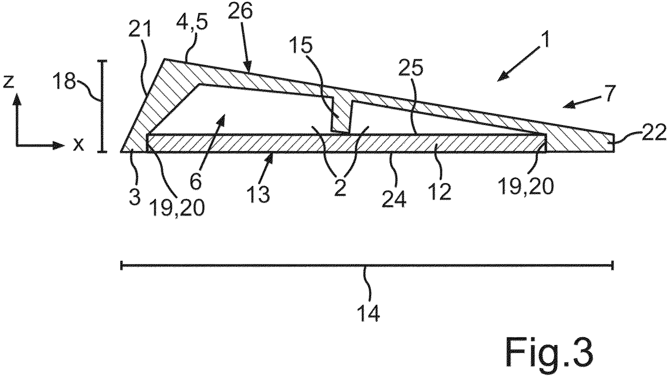

**FIG. 3** zeigt eine schematische Schnittdarstellung eines Profils 7 eines Ausführungsbeispiels einer erfindungsgemäßen Leitschaufel 1. Das Profil 7 kann insbesondere die Profiltiefe 14 in Richtung X und die Profildicke 18 in Richtung Z aufweisen. Das Profil 7 weist weiterhin die Profilvorderkante 21 und die Profilhinterkante 22 auf. Die Unterseite 3 kann insbesondere der Druckseite 13 des Profils 7 entsprechen, sowie eine Oberseite des Profils 7 einer Saugseite 26.

In der Schnittdarstellung ist der Hohlraum 2 zu erkennen, welcher durch die Vertiefung 6 in der Unterseite 3 des Grundkörpers und der Abdeckung 12 gebildet wird, insbesondere durch die Wandungen der Vertiefung 6 und der Innenseite 25 der Abdeckung 12 kann insbesondere in die Vertiefung 6 eingebracht sein, sodass die Außenseite 24 der Abdeckung mit der freiliegenden Unterseite 3 des Grundkörpers 5 bündig abschließt. Insbesondere sind dazu ein Randbereich 19 der Vertiefung 6 und der Rand 20 der Abdeckung komplementär zueinander ausgebildet, sodass die Abdeckung 12 passgenau in die Vertiefung 6 einbringbar ist. Insbesondere liegt der Rand 20 zumindest teilweise auf dem Randbereich 19 auf, sodass die Abdeckung 12 nach innen abgestützt ist. Beispielsweise kann die Abdeckung 12 am Rand 20 mit dem Grundkörper 5 verschweißt oder verlötet sein.

Der Grundkörper 5, der aus dem Rohling 4 gebildet ist, weist die äußere Geometrie der Leitschaufel 1 auf, mit Ausnahme des Bereiches der Abdeckung 6. Zusammen können diese die gesamte äußere Geometrie der Leitschaufel 1 ausbilden.

Die Vertiefung 6 kann insbesondere wannenförmig ausgebildet sein, insbesondere als ein Offset der Saugseite, sodass die Leitschaufel 1 im Wesentlichen eine einheitliche Wandstärke aufweisen kann. Die wannenförmige Vertiefung 6 weist insbesondere die zweite Haupterstreckungsrichtung X auf. Insbesondere kann sich die Vertiefung 6 mit Ausnahme von Randzonen an der Profilvorderkante 21 und der Profilhinterkante 22 über die gesamte Profiltiefe 14 erstrecken. Entsprechend kann die Abdeckung plattenförmig ausgebildet sein, welche sich im Wesentlichen in die Richtungen X und Y erstrecken kann und eine Dicke in Richtung Z der Profildicke 18 aufweisen kann.

Insbesondere kann sich die Vertiefung 6 mit Ausnahme der Abdeckung 12 und einer dünnen Wand an der Saugseite über die gesamte Profildicke 18 erstrecken. Insbesondere kann somit die Leitschaufel 1 einen dünnwandigen Hohlkörper darstellen.

Beispielsweise kann innerhalb des Hohlraumes 2 bzw. innerhalb der Vertiefung 6 einen Steg 15 aufweisen, welcher insbesondere mittig der Profiltiefe 14 ausgebildet sein kann und sich in Richtung Z aus dem Grundkörper 5 innerhalb des Hohlraumes 2 hervorheben kann. Dieser kann insbesondere der mittigen Abstützung der Abdeckung 12 vorgesehen sein. Darüber hinaus können weitere Stege bzw. Rippen vorgesehen sein. Insbesondere kann die Abdeckung 12 an den Stegen bzw. Rippen mittels Schweißen oder Löten mit dem Grundkörper 5 verbunden sein.

Die Leitschaufel 1 ist in den abgebildeten Figuren zur vereinfachten Darstellung durch gerade Linien dargestellt. Die Leitschaufel 1 kann jedoch gewölbt sein, insbesondere auf der Druckseite 13 und/oder Saugseite 26 bzw. diverse Krümmungen aufweisen. Insbesondere kann die Abdeckung 12 gewölbt sein.

Insgesamt zeigen die Ausführungsbeispiele, wie eine aus einem Schmiedeteil (Rohling 4) gebaute Leitschaufel 1 mit luftgeführter Enteisung bereitgestellt werden kann, insbesondere aus einem Titanwerkstoff. Titan-Schmiedewerkstoffe haben gegenüber Titan-Gusswerkstoffen vorteilhafte strukturmechanische Eigenschaften. Daher wird die Leitschaufel 1 aus einem Schmiederohling 4 hergestellt. Der für die luftgeführte Heizung benötigte Hohlraum 2 kann beispielsweise durch abtragende Fertigungsverfahren erstellt werden. Nachfolgend kann die gefertigte Vertiefung 6 bzw. Öffnung mit der Abdeckung, durch Fügen mittels Löten oder Schweißen, verschlossen werden. Die Abdeckung kann gleichzeitig einen Teil der Außenkontur, insbesondere der Druckseite 13 der Leitschaufel 1 ausbilden. Durch dieses Verfahren kann die Leitschaufel 1 als ein hohles Bauteil aus Schmiederohlingen gefertigt werden, das einer gegossenen Leitschaufel strukturmechanisch überlegen ist.

### Bezugszeichenliste:

- 1: Leitschaufel
- 2: Hohlraum
- 3: Unterseite
- 4: Rohling
- 5: Grundkörper
- 6: Vertiefung
- 7: Profil
- 8: Erster Kanal
- 9: Erste Stirnseite des Grundkörpers
- 10: Zweiter Kanal
- 11: Zweite Stirnseite des Grundkörpers
- 12: Abdeckung
- 13: Druckseite
- 14: Profiltiefe
- 15: Steg
- 16: Erster Lagerzapfen
- 17: Zweiter Lagerzapfen
- 18: Profildicke
- 19: Randbereich der Vertiefung
- 20: Rand der Abdeckung
- 21: Profilvorderkante
- 22: Profilhinterkante
- 23: Luftströmung
- 24: Außenseite der Abdeckung
- 25: Innenseite der Abdeckung
- 26: Saugseite
- X: Zweite Haupterstreckungsrichtung; Richtung der Profiltiefe
- Y: Erste Haupterstreckungsrichtung der Vertiefung
- Z: Richtung der Profildicke

## Patentansprüche

1. Verfahren zur Herstellung einer Leitschaufel (1), insbesondere eines Vorleitrades einer Fluggasturbine, mit einem Hohlraum (2) zum Führen eines gasförmigen oder flüssigen Mediums zur Enteisung der Leitschaufel (1), umfassend die Schritte:
a) Bereitstellen eines Werkstückes, bestehend aus einem Metall oder einer Metalllegierung;
b) Schmieden des Werkstückes zu einem Rohling (4), sodass der Rohling (4) zumindest näherungsweise eine Kontur der herzustellenden Leitschaufel (1) aufweist;
c) Abtragen von Material aus einer Unterseite (3) des Rohlings (4), sodass aus dem Rohling (4) ein Grundkörper (5) mit einer Vertiefung (6) in der Unterseite (3) gebildet wird, wobei sich die Vertiefung (6) entlang einer Haupterstreckungsrichtung (Y) senkrecht zu einem Profil (7) des Grundkörpers (5) erstreckt;
d) Einbringen eines ersten Kanals (8) in eine erste Stirnseite (9) des Grundkörpers (5) und/oder Einbringen eines zweiten Kanals (10) in eine zweite Stirnseite (11) des Grundkörpers (5), sodass der erste Kanal (8) und/oder der zweite Kanal (10) mit der Vertiefung (6) fluidisch verbunden ist;
e) Herstellen der Leitschaufel (1) durch Fügen des Grundkörpers (5) mit einer Abdeckung (12), wobei die Vertiefung (6) unter Ausbildung des Hohlraumes (2) durch die Abdeckung (12) abgedeckt wird und das gasförmige oder flüssige Medium von dem ersten Kanal (8) über den Hohlraum (2) in den zweiten Kanal (10) führbar ist.

2. Verfahren nach Anspruch 1, **dadurch gekennzeichnet, dass** der Rohling (4) aus dem Werkstück geschmiedet wird, indem das Werkstück in zumindest eine Negativform gepresst wird.

3. Verfahren nach Anspruch 2, **dadurch gekennzeichnet, dass** das Werkstück unmittelbar vor dem Pressen auf eine Temperatur oberhalb einer Rekristallisationstemperatur des Metalls oder der Metalllegierung erhitzt wird.

4. Verfahren nach einem der vorherigen Ansprüche, **dadurch gekennzeichnet, dass** das Material aus der Unterseite (3) des Rohlings (4) durch ein spanendes Fertigungsverfahren, insbesondere durch Fräsen, abgetragen wird.

5. Verfahren nach einem der vorherigen Ansprüche, **dadurch gekennzeichnet, dass** der Grundkörper (5) mit der Abdeckung (12) durch Schweißen oder Löten gefügt wird.

6. Leitschaufel (1), insbesondere eines Vorleitrades einer Fluggasturbine, **dadurch gekennzeichnet, dass**
- die Leitschaufel (1) aus einem geschmiedeten Grundkörper (5) mit einer entlang einer Haupterstreckungsrichtung (Y) senkrecht zu einem Profil (7) des Grundkörpers (5) erstreckenden Vertiefung (6) in einer Unterseite (3) des Grundkörpers (5) und einer Abdeckung (12) gebildet ist,
- die Abdeckung (12) an der Unterseite (3) derart angeordnet ist, dass die Vertiefung (6) unter Ausbildung eines Hohlraumes (2) zum Führen eines gasförmigen oder flüssigen Mediums zur Enteisung der Leitschaufel (1) durch die Abdeckung (12) abgedeckt ist, und
- ein erster Kanal (8) in einer ersten Stirnseite (9) des Grundkörpers (5) und ein zweiter Kanal (10) in einer zweiten Stirnseite (11) des Grundkörpers (5) über den Hohlraum (2) miteinander fluidisch verbunden sind.

7. Leitschaufel (1) nach Anspruch 6, **dadurch gekennzeichnet, dass** die Abdeckung (12) an einer Druckseite (13) der Leitschaufel (1) angeordnet ist.

8. Leitschaufel (1) nach Anspruch 6 oder 7, **dadurch gekennzeichnet, dass** die Abdeckung (12) nach außen bündig abschließend in die Vertiefung (6) eingebracht ist.

9. Leitschaufel (1) nach einem der Ansprüche 6 bis 8, **dadurch gekennzeichnet, dass** die Vertiefung (6) wannenförmig ausgebildet ist, wobei die wannenförmige Vertiefung (6) eine zweite Haupterstreckungsrichtung (X) entlang einer Profiltiefe (14) des Profils (7) aufweist.

10. Leitschaufel (1) nach Anspruch 9, **dadurch gekennzeichnet, dass** der Grundkörper (5) einen Steg (15) im Wesentlichen mittig der Profiltiefe (14) in der Vertiefung (6) zum mittigen Abstützen der Abdeckung (12) ausgebildet.

11. Leitschaufel (1) nach Anspruch 9, **dadurch gekennzeichnet, dass** der Grundkörper (5) zumindest zwei Stege (15) zum Abstützen der Abdeckung (12) ausbildet, welche entlang der Profiltiefe (14) in der Vertiefung (6) verteilt angeordnet sind.

12. Leitschaufel (1) nach einem der Ansprüche 6 bis 11, **dadurch gekennzeichnet, dass** in einem Bereich einer Profilhinterkante (22) der Leitschaufel (1) Öffnungen ausgebildet sind, die mit dem Hohlraum (2) fluidisch verbunden sind.

13. Leitschaufel (1) nach einem der Ansprüche 6 bis 11, **dadurch gekennzeichnet, dass** der Grundkörper (5) aus Titan oder einer Titanlegierung geschmiedet ist.

14. Leitschaufel (1) nach einem der Ansprüche 6 bis 13, **dadurch gekennzeichnet, dass** die Leitschaufel (1) durch ein Verfahren nach einem der Ansprüche 1 bis 5 hergestellt ist.
